(19) Europäisches Patentamt / European Patent Office / Office européen des brevets

(11) **EP 2 313 195 B1**

(12) **FASCICULE DE BREVET EUROPEEN**

(45) Date de publication et mention
de la délivrance du brevet:
**09.05.2012 Bulletin 2012/19**

(21) Numéro de dépôt: **09784314.8**

(22) Date de dépôt: **29.07.2009**

(51) Int Cl.:
*B01J 37/00* (2006.01)      *B01J 37/20* (2006.01)
*B01J 29/035* (2006.01)    *B01J 29/04* (2006.01)
*B01J 29/70* (2006.01)      *C01B 39/48* (2006.01)
*C01B 39/46* (2006.01)      *C10G 45/08* (2006.01)
*C10G 47/20* (2006.01)

(86) Numéro de dépôt international:
**PCT/FR2009/000942**

(87) Numéro de publication internationale:
**WO 2010/015736 (11.02.2010 Gazette 2010/06)**

(54) **CATALYSEUR À BASE DE ZÉOLITHE IZM-2 ET PROCÉDÉ D'HYDROCONVERSION / HYDROCRAQUAGE DE CHARGES HYDROCARBONÉES**

KATALYSATOR AUF BASIS VON IZM-2-ZEOLITH UND VERFAHREN ZUM HYDROKONVERTIEREN/HYDROCRACKEN VON EINSATZSTOFFEN AUF KOHLENWASSERSTOFFBASIS

CATALYST BASED ON IZM-2 ZEOLITE AND PROCESS FOR HYDROCONVERSION/ HYDROCRACKING OF HYDROCARBON-BASED FEEDSTOCKS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **08.08.2008 FR 0804562**

(43) Date de publication de la demande:
**27.04.2011 Bulletin 2011/17**

(73) Titulaire: **IFP Energies nouvelles
92852 Rueil-Malmaison Cedex (FR)**

(72) Inventeurs:
• **GUILLON, Emmanuelle
F-69390 Vernaison (FR)**
• **SIMON, Laurent
F-69100 Villeurbanne (FR)**

(56) Documents cités:
**EP-A- 1 702 888          EP-A- 1 953 118
WO-A-2009/004131      WO-A1-2009/144414
WO-A2-2009/144411    WO-A2-2009/144412
US-A- 4 539 193          US-A- 5 207 893**

**EP 2 313 195 B1**

**Description**

La présente invention concerne un catalyseur comprenant un support comprenant au moins un solide cristallisé IZM-2 et une phase active contenant au moins un élément hydro-déshydrogénant du groupe VIB et /ou du groupe VIII non noble de la classification périodique, ledit catalyseur étant un catalyseur phase sulfure.

L'invention concerne également les procédés d'hydrocraquage, d'hydroconversion et d'hydrotraitement mettant en oeuvre ce catalyseur.

En particulier, l'invention concerne l'hydrocraquage de charges hydrocarbonées contenant par exemple des composés aromatiques, et/ou oléfiniques, et/ou naphténiques, et/ou paraffiniques à l'exclusion des charges issues du procédé Fischer-Tropsch et contenant éventuellement des métaux, et/ou de l'azote, et/ou de l'oxygène et/ou du soufre.

L'objectif du procédé d'hydrocraquage est essentiellement la production de carburant, c'est-à-dire des coupes essence ayant un point d'ébullition compris entre 27 et 150°C, une coupe kérosène ayant un point d'ébullition compris entre 150 et 250°C, et une coupe gazole ayant un point d'ébullition compris entre 250 et 380°C.

**Art Antérieur**

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens, carburéacteurs et gazoles, de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydrogénante. La fonction acide est apportée par des supports dont les surfaces varient généralement de 150 à 800 m$^2$.g$^{-1}$ et présentant une acidité superficielle, telles que les alumines halogénées (chlorées ou fluorées notamment), les combinaisons d'oxydes de bore et d'aluminium, les silice-alumine amorphes et les zéolithes. La fonction hydrogénante est apportée soit par un ou plusieurs métaux du groupe VIB de la classification périodique des éléments, soit par une association d'au moins un métal du groupe VIB de la classification périodique et au moins un métal du groupe VIII.

L'équilibre entre les deux fonctions acide et hydrogénante est un des paramètres qui régissent l'activité et la sélectivité du catalyseur. Une fonction acide faible et une fonction hydrogénante forte donnent des catalyseurs peu actifs, travaillant à température en général élevée (supérieure ou égale à 390-400°C), et à vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens. Inversement, une fonction acide forte et une fonction hydrogénante faible donnent des catalyseurs actifs, mais présentant de moins bonnes sélectivités en distillats moyens (carburéacteurs et gazoles).

Un type de catalyseurs conventionnels d'hydrocraquage est à base de supports amorphes modérément acides, tels les silice-alumines par exemple. Ces systèmes sont utilisés pour produire des distillats moyens de bonne qualité, et éventuellement, des bases huiles. Ces catalyseurs sont par exemple utilisés dans les procédés en une étape. L'inconvénient de ces catalyseurs à base de support amorphe est leur faible activité.

Les catalyseurs comportant par exemple de la zéolithe Y de type structural FAU, ou les catalyseurs comportant par exemple une zéolithe de type bêta présentent quant à eux une activité catalytique supérieure à celle des silice-alumines, mais présentent des sélectivités en distillats moyens (carburéacteurs et gazoles) plus faibles.

EP 1953118 décrit un catalyseur comprenant une zeolithe IZM-1.

WO 2009/144414 décrit un catalyseur comprenant une zeolithe IZM-2 et au moins une phase active contenant au moins un élément hydro-déshydrogénant du groupe VIB et/ou du groupe VIII de la classification periodique.

Les travaux de recherche effectués par le demandeur sur de nombreuses zéolithes et solides microporeux cristallisés et sur les phases actives hydrogénantes, l'ont conduit à découvrir que, de façon surprenante, un catalyseur d'hydrocraquage de charges hydrocarbonées comprenant un support comprenant au moins un solide cristallisé IZM-2 et une phase active contenant au moins un élément hydro-déshydrogénant du groupe VIB et /ou du groupe VIII non noble de la classification périodique, ledit catalyseur étant un catalyseur phase sulfure, éventuellement au moins une matrice, au moins un élément dopant choisi dans le groupe formé par le bore, le silicium et le phosphore, éventuellement au moins un élément du groupe VB de la classification périodique des éléments, et de préférence le niobium, et éventuellement un élément du groupe VIIA, et de préférence le fluor, permet d'obtenir des activités, c'est à dire un niveau

2

de conversion, élevées en hydrocraquage, hydroconversion et d'hydrotraitement.

## Techniques de caractérisation

La composition globale du catalyseur peut être déterminée par fluorescence X sur le catalyseur à l'état pulvérulent ou par absorption atomique après attaque acide du catalyseur.

On notera que l'appellation diamètre ne se réfère pas uniquement à une forme en bille ou en extrudé, mais plus généralement à toute forme de particules ; est dénommée diamètre en fait la longueur représentative de la particule sur laquelle est effectuée la mesure.

## Description détaillée de l'invention

La présente invention concerne un catalyseur comprenant :
- un support comprenant au moins un solide cristallisé IZM-2 présentant un diagramme de diffraction des rayons X incluant au moins les raies inscrites dans le tableau ci-dessous :

| 2 thêta (°) | dhkl (Å) | Irel | 2 thêta (°) | dhkl (Å) | Irel |
|---|---|---|---|---|---|
| 5,07 | 17,43 | ff | 19,01 | 4,66 | ff |
| 7,36 | 12,01 | FF | 19,52 | 4,54 | ff |
| 7,67 | 11,52 | FF | 21,29 | 4,17 | m |
| 8,78 | 10,07 | F | 22,44 | 3,96 | f |
| 10,02 | 8,82 | ff | 23,10 | 3,85 | mf |
| 12,13 | 7,29 | ff | 23,57 | 3,77 | f |
| 14,76 | 6,00 | ff | 24,65 | 3,61 | ff |
| 15,31 | 5,78 | ff | 26,78 | 3,33 | f |
| 15,62 | 5,67 | ff | 29,33 | 3,04 | ff |
| 16,03 | 5,52 | ff | 33,06 | 2,71 | ff |
| 17,60 | 5,03 | ff | 36,82 | 2,44 | ff |
| 18,22 | 4,87 | ff | 44,54 | 2,03 | ff |

- où FF = très fort ; F = fort ; m = moyen ; mf = moyen faible ; f = faible ; ff = très faible et présentant une composition chimique, exprimée sur une base anhydre, en termes de moles d'oxydes, par la formule générale suivante : $XO_2$ : $aY_2O_3$ : $bM_2/nO$ dans laquelle X représente au moins un élément tétravalent, Y représente au moins un élément trivalent et M est au moins un métal alcalin et/ou un métal alcalino-terreux de valence n, a et b représentent respectivement le nombre de moles de $Y_2O_3$ et $M_2/nO$ et a est compris entre 0 et 0,5 et b est compris entre 0 et 1, et
- une phase active contenant au moins un élément hydro-déshydrogénant du groupe VIB et /ou au moins un élément hydro-déshydrogénant du groupe VIII non noble de la classification périodique, ledit catalyseur étant un catalyseur phase sulfure.

## Le catalyseur d'hydrocraquage et d'hydroisomérisation

Conformément à l'invention, ledit catalyseur comprend une phase active contenant au moins un élément hydro-déshydrogénant du groupe VIB et/ou au moins un élément hydro-déshydrogénant du groupe VIII non noble de la classification périodique.

De préférence, l'invention concerne un catalyseur comprenant au moins un élément hydro-déshydrogénant choisi dans le groupe formé par les éléments du groupe VIB de la classification périodique.

De manière préférée, ledit catalyseur comprend, en % poids par rapport à la masse totale du catalyseur, une teneur massique en métal(aux) du groupe VIB, comprise entre 0,1 et 40 % en poids, de manière très préférée entre 1,5 et 35 % en poids, et de manière encore plus préférée entre 3 et 25% en poids,

De préférence, l'invention concerne un catalyseur comprenant au moins un élément hydro-déshydrogénant choisi dans le groupe formé par les éléments du groupe VIII non noble de la classification périodique.

De manière préférée, ledit catalyseur comprend, en % poids par rapport à la masse totale du catalyseur, une teneur massique en métal(aux) du groupe VIII non noble, comprise entre 0 à 25% en poids, de préférence de 0,1 à 20% en poids et de manière encore plus préférée de 0,1 à 15% en poids.

Le catalyseur peut également avantageusement contenir :

- de 0 à 20% en poids, de préférence de 0,1 à 15% en poids et de manière encore plus préférée de 0,1 à 10% en poids d'au moins un élément dopant choisi dans le groupe constitué par le silicium, le bore et le phosphore, non compris le silicium contenu dans la charpente de la zéolithe et éventuellement encore
- de 0 à 60% en poids, de préférence de 0,1 à 50% en poids, et de manière encore plus préférée de 0,1 à 40% en poids, d'au moins un élément choisi dans le groupe VB et de préférence le niobium et éventuellement
- de 0 à 20% en poids, de préférence de 0,1 à 15% en poids et de manière encore plus préférée de 0,1 à 10% en poids d'au moins un élément choisi dans le groupe VIIA, de préférence le fluor.

De préférence, le catalyseur selon l'invention comporte un support à base de zéolithe IZM-2 et d'une matrice minérale poreuse de type oxyde, ledit support comprenant :

- 0,1 à 99,8% en poids, de préférence de 0,1 à 80% en poids, de manière encore plus préférée de 0,1 à 70% en poids, et de manière très préférée 0,1 à 50% en poids de zéolithe IZM-2,
- 0,2 à 99,9% en poids, de préférence de 1 à 99 % en poids d'au moins une matrice minérale poreuse de type oxyde.

L'invention concerne également un procédé d'hydrocraquage et un procédé d'hydrotraitement de charges hydrocarbonées avec ledit catalyseur.

Caractéristiques de la Phase hydrogénante

Conformément à l'invention, ledit catalyseur comprend une phase active contenant au moins un élément hydro-déshydrogénant du groupe VIB et/ou au moins un élément hydro-déshydrogénant du groupe VIII non noble de la classification périodique.

De préférence, l'invention concerne un catalyseur comprenant au moins un élément hydro-déshydrogénant choisi dans le groupe formé par les éléments du groupe VIB de la classification périodique et de préférence un métal choisi dans le groupe formé par le tungstène et le molybdène, pris seuls ou en mélange.

Selon un mode de réalisation préféré, l'élément hydro-déshydrogénant choisi dans le groupe formé par les éléments du groupe VIB de la classification périodique est le molybdène. Selon un autre mode de réalisation préféré, l'élément hydro-déshydrogénant choisi dans le groupe formé par les éléments du groupe VIB de la classification périodique est le tungstène.

De préférence, l'invention concerne un catalyseur comprenant au moins un élément hydro-déshydrogénant choisi dans le groupe formé par les éléments non nobles du groupe VIII de la classification périodique et de préférence un métal choisi dans le groupe formé par le cobalt et le nickel, pris seuls ou en mélange.

Selon un mode de réalisation préféré, l'élément hydro-déshydrogénant choisi dans le groupe formé par les éléments du groupe VIII non noble est le cobalt.

Selon un mode de réalisation préféré, l'élément hydro-déshydrogénant choisi dans le groupe formé par les éléments du groupe VIII non noble est le nickel.

D'une manière avantageuse, on utilise les associations de métaux suivantes : nickel-molybdène, cobalt-molybdène, fer-molybdène, fer-tungstène, nickel-tungstène, cobalt-tungstène, les associations préférées sont : nickel-molybdène, cobalt-molybdène, cobalt-tungstène, nickel-tungstène et encore plus avantageusement nickel-moybdène et nickel-tungstène.

Il est également possible d'utiliser des associations de trois métaux par exemple nickel-cobalt-molybdène, nickel-molybdène-tungstène, nickel-cobalt-tungstène.

D'une manière avantageuse, on utilise les associations de métaux suivantes : nickel-niobium-molybdène, cobalt-niobium-molybdène, fer-niobium-molybdène, nickel-niobium-tungstène, cobalt-niobium-tungstène, fer-niobium-tungstène, les associations préférées étant : nickel-niobium-molybdène, cobalt-niobium-molybdène. Il est également possible d'utiliser des associations de quatre métaux par exemple nickel-cobalt-niobium-molybdène.

**Le solide cristallisé IZM-2**

Conformément à l'invention, le support du catalyseur selon l'invention comprend au moins un solide cristallisé IZM-2 présentant une composition chimique exprimée sur une base anhydre, en termes de moles d'oxydes, par la formule générale suivante : $XO_2 : aY_2O_3 : bM_{2/n}O$ dans laquelle X représente au moins un élément tétravalent, Y représente au moins un élément trivalent et M est au moins un métal alcalin et/ou un métal alcalino-terreux de valence n, a et b représentent respectivement le nombre de moles de $Y_2O_3$ et $M_2/nO$ et a est compris entre 0 et 0,5 et b est compris entre 0 et 1.

Conformément à l'invention, le solide cristallisé IZM-2 utilisé dans le support du catalyseur présente un diagramme de diffraction de rayons X incluant au moins les raies inscrites dans le tableau 1. Ce nouveau solide cristallisé IZM-2 présente une nouvelle structure cristalline. Ce diagramme de diffraction est avantageusement obtenu par analyse radiocristallographique au moyen d'un diffractomètre en utilisant la méthode classique des poudres avec le rayonnement $K\alpha1$ du cuivre ($\lambda$ = 1,5406Å). A partir de la position des pics de diffraction représentée par l'angle $2\theta$, on calcule, par la relation de Bragg, les équidistances réticulaires $d_{hkl}$ caractéristiques de l'échantillon. L'erreur de mesure $\Delta(d_{hkl})$ sur $d_{hkl}$ est calculée grâce à la relation de Bragg en fonction de l'erreur absolue $\Delta(2\theta)$ affectée à la mesure de $2\theta$. Une erreur absolue $\Delta(2\theta)$ égale à $\pm$ 0,02° est communément admise.

L'intensité relative Irel affectée à chaque valeur de $d_{hkl}$ est mesurée d'après la hauteur du pic de diffraction correspondant. Le diagramme de diffraction des rayons X du solide cristallisé IZM-2 selon l'invention comporte au moins les raies aux valeurs de $d_{hkl}$ données dans le tableau 1. Dans la colonne des $d_{hkl}$, on a indiqué les valeurs moyennes des distances inter-réticulaires en Angströms (Å). Chacune de ces valeurs doit être affectée de l'erreur de mesure $\Delta(d_{hkl})$ comprise entre $\pm$ 0,6Å et $\pm$ 0,01 Å.

Tableau 1 : Valeurs moyennes des $d_{hkl}$ et intensités relatives mesurées sur un diagramme de diffraction de rayons X du solide cristallisé IZM-2 calciné.

| 2 thêta (°) | $d_{hkl}$ (Å) | Irel | 2 thêta (°) | dhkl (Å) | Irel |
|---|---|---|---|---|---|
| 5,07 | 17,43 | ff | 19,01 | 4,66 | ff |
| 7,36 | 12,01 | FF | 19,52 | 4,54 | ff |
| 7,67 | 11,52 | FF | 21,29 | 4,17 | m |
| 8,78 | 10,07 | F | 22,44 | 3,96 | f |
| 10,02 | 8,82 | ff | 23,10 | 3,85 | mf |
| 12,13 | 7,29 | ff | 23,57 | 3,77 | f |
| 14,76 | 6,00 | ff | 24,65 | 3,61 | ff |
| 15,31 | 5,78 | ff | 26,78 | 3,33 | f |
| 15,62 | 5,67 | ff | 29,33 | 3,04 | ff |
| 16,03 | 5,52 | ff | 33,06 | 2,71 | ff |
| 17,60 | 5,03 | ff | 36,82 | 2,44 | ff |
| 18,22 | 4,87 | ff | 44,54 | 2,03 | ff |

L'intensité relative Irel est donnée en rapport à une échelle d'intensité relative où il est attribué une valeur de 100 à la raie la plus intense du diagramme de diffraction des rayons X ff<15 ; 15≤f<30 ; 30≤mf<50 ; 50≤m<65 ; 65≤F<85 ; FF≥85.

Le solide cristallisé IZM-2 utilisé dans le support du catalyseur selon l'invention présente avantageusement une nouvelle structure cristalline de base ou topologie qui est caractérisée par son diagramme de diffraction X sous la forme calcinée donné par la figure 1.

Ledit solide IZM-2 présente avantageusement une composition chimique exprimée sur une base anhydre, en termes de moles d'oxydes, définie par la formule générale suivante : $XO_2$ : $aY_2O_3$ : $bM_2/nO$, dans laquelle X représente au moins un élément tétravalent, Y représente au moins un élément trivalent et M est au moins un métal alcalin et/ou un métal alcalino-terreux de valence n. Dans ladite formule donnée ci-dessus, a représente le nombre de moles de $Y_2O_3$ et a est compris entre 0 et 0,5, très préférentiellement compris entre 0 et 0,05 et de manière encore plus préférée entre et 0,0016 et 0,02 et b représente le nombre de moles de $M_2/nO$ et est compris entre 0 et 1, de préférence entre 0 et 0,5 et de manière encore plus préférée entre 0,005 et 0,5.

De préférence, X est choisi parmi le silicium, le germanium, le titane et le mélange d'au moins deux de ces éléments tétravalents, très préférentiellement X est le silicium et Y est préférentiellement choisi parmi l'aluminium, le bore, le fer, l'indium et le gallium, très préférentiellement Y est l'aluminium. M est préférentiellement choisi parmi le lithium, le sodium, le potassium, le calcium, le magnésium et le mélange d'au moins deux de ces métaux et très préférentiellement M est le sodium. De manière préférée, X représente le silicium, ledit solide cristallisé IZM-2 est alors un solide entièrement silicique lorsque l'élément Y est absent de la composition dudit solide IZM-2. Il est également avantageux d'employer comme élément X un mélange de plusieurs éléments X, en particulier un mélange de silicium avec un autre élément X choisi parmi le germanium et le titane, de préférence le germanium. Ainsi, lorsque le silicium est présent en mélange avec un autre élément X, ledit solide cristallisé IZM-2 est alors un métallosilicate cristallisé présentant un diagramme de diffraction des rayons X identique à celui décrit dans le tableau 1 lorsqu'il se trouve sous sa forme calcinée. De manière encore plus préférée et en présence d'un élément Y, X étant le silicium et Y étant l'aluminium : ledit solide cristallisé IZM-2 est alors un aluminosilicate cristallisé présentant un diagramme de diffraction des rayons X identique à celui décrit dans le tableau 1 lorsqu'il se trouve sous sa forme calcinée.

D'une manière plus générale, ledit solide IZM-2 utilisé dans le support du catalyseur mis en oeuvre dans le procédé selon l'invention présente avantageusement une composition chimique exprimée par la formule générale suivante : $XO_2 : aY_2O_3 : bM_2/nO : cR : dH_2O$ dans laquelle R représente une espèce organique comportant deux atomes d'azote quaternaires, X représente au moins un élément tétravalent, Y représente au moins un élément trivalent et M est un métal alcalin et/ou un métal alcalino-terreux de valence n ; a, b, c et d représentant respectivement le nombre de moles de $Y_2O_3$, $M_2/nO$, R et $H_2O$ et a est compris entre 0 et 0,5, b est compris entre 0 et 1, c est compris entre 0 et 2 et d est compris entre 0 et 2. Cette formule et les valeurs prises par a, b, c et d sont celles pour lesquelles ledit solide IZM-2 se trouve préférentiellement sous sa forme calcinée.

Plus précisément, ledit solide IZM-2, sous sa forme brute de synthèse, présente avantageusement une composition chimique exprimée par la formule générale suivante : $XO_2 : aY_2O_3 : bM_2/nO : cR : dH_2O$ (I) dans laquelle R représente une espèce organique comportant deux atomes d'azote quaternaires. X représente au moins un élément tétravalent, Y représente au moins un élément trivalent et M est un métal alcalin et/ou un métal alcalino-terreux de valence n ; a, b, c et d représentant respectivement le nombre de moles de $Y_2O_3$, $M_2/nO$, R et $H_2O$ et a est compris entre 0 et 0,5, b est compris entre 0 et 1, c est compris entre 0,005 et 2 et de préférence entre 0,01 et 0,5, et d est compris entre 0,005 et 2 et de préférence entre 0,01 et 1.

Dans la formule (I) donnée ci-dessus pour définir la composition chimique dudit solide cristallisé IZM-2 sous sa forme brute de synthèse, la valeur de a est comprise entre 0 et 0,5, très préférentiellement comprise entre 0 et 0,05 et de manière encore plus préférée comprise entre 0,0016 et 0,02. De manière préférée, b est compris entre 0 et 1, de manière très préférée b est compris entre 0 et 0,5 et de manière encore plus préférée b est compris entre 0,005 et 0,5. La valeur de c est comprise entre 0,005 et 2, avantageusement entre 0,01 et 0,5. La valeur prise par d est comprise entre 0,005 et 2, de préférence comprise entre 0,01 et 1.

Sous sa forme brute de synthèse, c'est-à-dire directement issu de la synthèse et préalablement à toute étape de calcination(s) bien connue de l'Homme du métier, ledit solide IZM-2 comporte avantageusement au moins l'espèce organique R ayant deux atomes d'azote quaternaires telle que celle décrite ci-après ou encore ses produits de décomposition ou encore ses précurseurs. Selon un mode préféré de l'invention, dans la formule (I) donnée ci-dessus, l'élément R est le 1,6-bis(méthylpiperidinium)hexane dont la formule développée est donnée ci-dessous. Ladite espèce organique R, qui joue le rôle de structurant, peut être éliminée par les voies classiques connues de l'état de la technique comme des traitements thermiques et/ou chimiques.

Un procédé de préparation dudit solide cristallisé IZM-2 consiste avantageusement à faire réagir un mélange aqueux comportant au moins une source d'au moins un oxyde $XO_2$, éventuellement au moins une source d'au moins un oxyde $Y_2O_3$, éventuellement au moins une source d'au moins un métal alcalin et/ou alcalino-terreux de valence n, au moins une espèce organique R comportant deux atomes d'azote quaternaires, le mélange présentant préférentiellement la composition molaire suivante:

$XO_2/Y_2O_3$: au moins 2, de préférence au moins 20, de manière plus préférée de 60 à 600,
$H_2O/XO_2$: 1 à 100, de préférence de 10 à 70,
$R/XO_2$: 0,02 à 2, de préférence de 0,05 à 0,5,
$M_2/nO/XO_2$: 0 à 1, de préférence de 0,005 et 0,5,
où X est un ou plusieurs élément(s) tétravalent(s) choisi(s) dans le groupe formé par les éléments suivants : silicium, germanium, titane, de préférence le silicium, où Y est un ou plusieurs élément(s) trivalent(s) choisi(s) dans le groupe formé par les éléments suivants: aluminium, fer, bore, indium et gallium, de préférence l'aluminium et où M est un ou plusieurs métal(aux) alcalin(s) et/ou alcalino-terreux choisi(s) parmi le lithium, le sodium, le potassium, le calcium, le magnésium et le mélange d'au moins deux de ces métaux de préférence le sodium.

Conformément au procédé de préparation dudit solide cristallisé IZM-2, R est avantageusement une espèce organique ayant deux atomes d'azote quaternaires jouant le rôle de structurant organique. Préférentiellement, R est le composé azoté 1,6-bis(méthylpiperidinium)hexane. Les anions associés aux cations ammoniums quaternaires présents dans l'espèce organique structurante pour la synthèse dudit solide cristallisé IZM-2 sont avantageusement choisis parmi l'anion acétate, l'anion sulfate, l'anion carboxylate, l'anion tétrafluoroborate, les anions halogénures tels que le fluorure, le chlorure, le bromure, l'iodure, l'anion hydroxyde et une combinaison de plusieurs d'entre eux. De manière préférée, les anions associés aux cations ammoniums quaternaires présents dans l'espèce structurante pour la synthèse du solide cristallisé IZM-2 sont choisis parmi l'anion hydroxyde et l'anion bromure. Ladite espèce organique azotée utilisée comme agent structurant dudit solide cristallisé IZM-2 est avantageusement synthétisée par toute méthode connue de l'Homme du métier. Pour la synthèse du dibromure de 1,6-bis(méthylpiperidinium)hexane, on procède avantageusement au mélange d'une mole de 1,6-dibromohexane et d'au moins 2 moles de N-méthylpiperidine dans méthanol. Généralement, le mélange est porté à reflux pendant une durée comprise entre 3 et 10 heures. Après filtration, précipitation au moyen d'un solvant éthéré tel que le diéthyéther puis recristallisation dans un mélange éthanol/éther, on obtient du dibromure de 1,6-bis(méthylpiperidinium)hexane. Le dihydroxyde de 1,6-bis(méthylpiperidinium)hexane est préférentiellement obtenu par traitement à température ambiante d'une solution aqueuse de dibromure de 1,6-bis(méthylpiperidinium)hexane par de l'oxyde d'argent $Ag_2O$.

La source de l'élément X, employée pour la mise en oeuvre du procédé de préparation dudit solide cristallisé IZM-2, peut avantageusement être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale, de la silice dissoute ou du tétraéthoxysilane (TEOS). Parmi les silices en poudre, on peut avantageusement utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX". De manière préférée, la source de silicium est le LUDOX AS-40.

La source de l'élément Y, éventuellement employée pour la mise en oeuvre du procédé de préparation dudit solide cristallisé IZM-2, peut avantageusement être tout composé comprenant l'élément Y et pouvant libérer cet élément en solution aqueuse sous forme réactive. Dans le cas préféré où Y est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Pour la source de métal M alcalin et/ou alcalino-terreux de valence n, on utilise avantageusement un halogénure ou un hydroxyde dudit métal M, de préférence un hydroxyde dudit métal M.

Pour la mise en oeuvre du procédé de préparation dudit solide IZM-2, il est préféré que le mélange aqueux, comportant au moins une source d'au moins un oxyde XO2, éventuellement au moins une source d'au moins un oxyde Y2O3, éventuellement au moins une source d'au moins un métal alcalin et/ou alcalino-terreux de valence n, au moins une espèce organique R ayant deux atomes d'azote quaternaires, comporte également au moins une source d'ions hydroxydes. Ladite source d'ions hydroxydes provient avantageusement de l'espèce organique structurante R lorsqu'elle se trouve sous sa forme hydroxyde, à savoir le dihydroxyde de 1,6-bis(méthylpiperidinium)hexane, ou encore de la source de métal M alcalin et/ou alcalino-terreux lorsqu'il se trouve sous forme hydroxyde, par exemple l'hydroxyde de sodium.

Aussi, selon un mode de réalisation préféré du procédé de préparation dudit solide cristallisé IZM-2, on fait réagir un mélange aqueux comportant un oxyde de silicium, éventuellement de l'alumine, du dibromure de 1,6-bis (méthylpiperidinium)hexane et de l'hydroxyde de sodium. Selon un autre mode de réalisation préféré du procédé selon l'invention, on fait réagir un mélange aqueux comportant un oxyde de silicium, éventuellement de l'alumine et du dihydroxyde de 1,6-bis(méthylpiperidinium)hexane.

Le procédé de préparation dudit solide cristallisé IZM-2 consiste avantageusement à préparer un mélange réactionnel aqueux appelé gel et renfermant au moins une source d'au moins un oxyde $XO_2$, éventuellement au moins une source d'au moins un oxyde $Y_2O_3$, au moins une espèce organique R, éventuellement au moins une source d'au moins un métal alcalin et/ou alcalino-terreux de valence n. Les quantités desdits réactifs sont avantageusement ajustées de manière à conférer à ce gel une composition permettant sa cristallisation en solide cristallisé IZM-2 sous sa forme brute de synthèse de formule générale (I) $XO_2 : aY_2O_3 : bM_2/nO : cR : dH_2O$, où a, b, c et d répondent aux critères définis plus haut lorsque c et d sont supérieurs à 0. Puis le gel est soumis à un traitement hydrothermal jusqu'à ce que ledit solide cristallisé IZM-2 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore plus préférée entre 160 et 175°C jusqu'à la formation des cristaux de solide IZM-2 sous sa forme brute de synthèse. La durée nécessaire pour obtenir la cristallisation varie généralement entre 1 heure et plusieurs mois en fonction de la composition des réactifs dans le gel, de l'agitation et de la température de réaction. De préférence la durée de cristallisation varie entre 2 heures et 21 jours. La mise en réaction s'effectue généralement sous agitation ou en absence d'agitation, de préférence en présence d'agitation.

Il peut être avantageux d'additionner des germes au mélange réactionnel afin de réduire le temps nécessaire à la formation des cristaux et/ou la durée totale de cristallisation. Il peut également être avantageux d'utiliser des germes afin de favoriser la formation dudit solide cristallisé IZM-2 au détriment d'impuretés. De tels germes comprennent avantageusement des solides cristallisés, notamment des cristaux de solide IZM-2. Les germes cristallins sont généralement ajoutés dans une proportion comprise entre 0,01 et 10% de la masse de l'oxyde XO2 utilisée dans le mélange réactionnel.

A l'issue de l'étape de traitement hydrothermal conduisant à la cristallisation dudit solide IZM-2, la phase solide est avantageusement filtrée, lavée, séchée puis calcinée. L'étape de calcination s'effectue avantageusement par une ou plusieurs étapes de chauffage réalisée à une température comprise entre 100 et 1000°C, de préférence comprise entre 400 et 650°C, pour une durée comprise entre quelques heures et plusieurs jours, de préférence comprise entre 3 heures et 48 heures. De manière préférée, la calcination s'effectue en deux étapes de chauffage consécutives.

A l'issue de ladite étape de calcination, ledit solide IZM-2 obtenu est avantageusement celui présentant le diagramme de diffraction de rayons X incluant au moins les raies inscrites dans le tableau 1. Il est dépourvu d'eau ainsi que de l'espèce organique R présentes dans le solide IZM-2 sous sa forme brute de synthèse.

Après calcination, le solide IZM-2 entrant dans la composition du support du catalyseur selon l'invention est avantageusement échangé par au moins un traitement par une solution d'au moins un sel d'ammonium de manière à obtenir la forme ammonium du solide IZM-2 qui une fois calcinée conduit à la forme acide (H+) dudit solide IZM-2. Cette étape d'échange peut être effectuée à toute étape de la préparation du catalyseur, c'est-à-dire après l'étape de préparation du solide IZM-2, après l'étape de mise en forme du solide IZM-2 (par pastillage ou par un liant minéral poreux), ou encore après l'étape d'introduction du métal hydro-déshydrogénant. De préférence l'étape d'échange est effectuée après l'étape de mise en forme du solide IZM-2.

Ledit solide IZM-2 entrant dans la composition du support du catalyseur utilisé dans le procédé selon l'invention est avantageusement au moins en partie, de préférence pratiquement totalement, sous formé acide, c'est-à-dire sous forme acide (H+). Le rapport atomique M/Y est généralement avantageusement inférieur à 0,1 et de préférence inférieur à 0,05 et de manière encore plus préférée inférieur à 0,01.

La zéolithe IZM-2 mise en oeuvre selon l'invention est au moins en partie sous forme hydrogène ($H^+$) ou ammonium ($NH_4^+$). Éventuellement, une partie de la zéolithe peut être sous forme cationique, ledit cation étant choisi dans le groupe formé par les groupes IA, IB, IIA, IIB, IIIA, IIIB (y compris les terres rares), Sn, Pb et Si. La zéolithe IZM-2, sous forme hydrogène ou partiellement sous forme hydrogène, désignée par H-IZM-2 est obtenue par calcination et/ou échanges ioniques de la zéolithe IZM-2 brute de synthèse.

Parmi les zéolithes IZM-2 on préfère habituellement employer des zéolithes IZM-2 dont le rapport atomique global, silicium/aluminium (Si/Al) est supérieur à environ 3 et de manière plus préférée des zéolithes IZM-2 dont le rapport Si/Al est compris entre 5 et 200 et de manière encore plus préféré entre 10 et 150. Ces zéolithes IZM-2 possédant les rapports Si/Al décrits ci-dessus peuvent être obtenus à la synthèse ou par toute technique post-synthèse connue de l'homme de l'art, soit par exemple les techniques de désalumination, de réalumination, de désilication ou d'échange. La préparation et le ou les traitements ainsi que la mise en forme de la zéolithe peuvent ainsi constituer une étape de la préparation de ces catalyseurs.

Caractéristiques de la matrice minérale poreuse amorphe ou mal cristallisée de type oxyde

La matrice minérale poreuse, habituellement amorphe, est en général constituée d'au moins un oxyde réfractaire. Ladite matrice est habituellement choisie dans le groupe formé par l'alumine, la silice, les argiles, l'oxyde de titane, l'oxyde de bore et la zircone. La matrice peut être constituée par un mélange de aux moins deux des oxydes cités ci dessus, par exemple la silice-alumine. On peut choisir également les aluminates. On préfère utiliser des matrices contenant de l'alumine, sous toutes ces formes connues de l'homme du métier, par exemple l'alumine gamma.

On peut aussi avantageusement utiliser des mélanges d'alumine et de silice, des mélanges d'alumine et de silice-alumine.

L'invention concerne également un procédé d'hydrocraquage et un procédé d'hydrotraitement de charges hydrocarbonées avec ledit catalyseur.

Préparation du catalyseur

Un procédé préféré de préparation du catalyseur selon la présente invention comprend les étapes suivantes :

La zéolithe IZM-2 mise en oeuvre selon l'invention peut être introduite selon toute méthode connue de l'homme de l'art et ce à tout stade de la préparation du support ou du catalyseur.

La zéolithe IZM-2 mise en oeuvre selon l'invention est au moins en partie sous forme hydrogène ($H^+$) ou ammonium ($NH_4^+$) telle que décrite précédemment.

La zéolithe peut être, sans que cela soit limitatif, par exemple sous forme de poudre, poudre broyée, suspension, suspension ayant subi un traitement de désagglomération. Ainsi, par exemple, la zéolithe peut être mise en suspension acidulée ou non à une concentration ajustée à la teneur finale en zéolithe visée sur le support. Cette suspension appelée couramment une barbotine est alors mélangée avec les précurseurs de la matrice.

Selon un mode de préparation préféré, la zéolithe peut être introduite lors de la mise en forme du support avec les éléments qui constituent la matrice. Par exemple, selon ce mode préféré de la présente invention, la zéolithe IZM-2 est ajoutée à un gel humide d'alumine au cours de l'étape de mise en forme du support.

Une des méthodes préférées de la mise ne forme du support dans la présente invention consiste à malaxer au moins une zéolithe IZM-2, avec un gel humide d'alumine pendant quelques dizaines de minutes, puis à passer la pâte ainsi obtenue à travers une filière pour former des extrudés de diamètre compris entre 0,4 et 4 mm.

Selon un autre mode de préparation préférée, la zéolithe peut être introduite au cours de la synthèse de la matrice. Par exemple, selon ce mode préféré de la présente invention, la zéolithe IZM-2 est ajoutée au cours de la synthèse de la matrice silico-aluminique ; la zéolithe peut être ajoutée à un mélange composé d'un composé d'alumine en milieu acide avec un composé de silice totalement soluble.

Le support peut être mis en forme par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

Au moins une calcination peut être effectuée après l'une quelconque des étapes de la préparation. Le traitement de calcination est habituellement effectué sous air à une température d'au moins 150°C, de préférence au moins 300°C, de manière plus préférée entre environ 350 et 1000°C.

Les éléments des groupes VIB, et éventuellement les éléments du groupe VIII en excluant le platine et le palladium, et éventuellement ceux choisis parmi le phosphore, le bore, le silicium et éventuellement les éléments des groupes VB, et VIIB peuvent être éventuellement introduits, tout ou partie, à toute étape de la préparation, au cours de la synthèse de la matrice, de préférence lors de la mise en forme du support, ou de manière très préférée après la mise en forme du support par toute méthode connue de l'homme du métier. Ils peuvent être introduits après la mise en forme du support et ce après ou avant le séchage et la calcination du support.

Selon un mode préféré de la présente invention, tout ou partie des éléments des groupes VIB, et éventuellement les éléments du groupe VIII en excluant le platine et le palladium, et éventuellement ceux choisis parmi le phosphore, le bore, le silicium et éventuellement les éléments des groupes VB, et VIIB peuvent être introduits au cours de la mise en forme du support, par exemple, lors de l'étape de malaxage de la zéolithe IZM-2 avec un gel d'alumine humide.

Selon un autre mode préféré de la présente invention, tout ou partie des éléments des groupes VIB, et éventuellement les éléments du groupe VIII en excluant le platine et le palladium, et éventuellement ceux choisis parmi le phosphore, le bore, le silicium et éventuellement les éléments des groupes VB, et VIIB peuvent être introduits par une ou plusieurs opérations d'imprégnation du support mis en forme et calciné, par une solution contenant les précurseurs de ces éléments. D'une façon préférée, le support est imprégné par une solution aqueuse. L'imprégnation du support est de préférence effectuée par la méthode d'imprégnation dite "à sec" bien connue de l'homme du métier.

Dans le cas ou le catalyseur de la présente invention contient un métal du groupe VIII en excluant le platine et le palladium, les métaux du groupe VIII sont de préférence introduits par une ou plusieurs opérations d'imprégnation du support mis en forme et calciné, après ceux du groupe VIB ou en même temps que ces derniers.

Selon un autre mode préféré de la présente invention, le dépôt de bore et de silicium peut aussi être réalisé de manière simultanée en utilisant par exemple une solution contenant un sel de bore et un composé du silicium de type silicone.

L'imprégnation du niobium peut être facilitée par ajout d'acide oxalique et éventuellement d'oxalate d'ammonium dans les solutions de d'oxalate de niobium. D'autres composés peuvent être utilisés pour améliorer la solubilité et faciliter l'imprégnation du niobium comme il est bien connu de l'homme du métier.

Lorsque au moins un élément dopant, P et/ou B et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseur, ou bien encore par l'établissement d'une cartographie de répartition des éléments présents dans le catalyseur par microsonde électronique.

Il est intéressant de préparer des catalyseurs présentant des concentrations homogènes $C_{Mo}$, $C_{Ni}$, $C_W$ et $C_P$ le long de l'extrudé. Il est également intéressant de préparer des catalyseurs présentant des concentrations $C_{Mo}$, $C_{Ni}$, $C_W$ et $C_P$ au coeur et en périphérie différentes. Ces catalyseurs présentent des profils de répartition dits en « cuvette » ou en « dôme ». Un autre type de répartition est celle en croûte où les éléments de la phase active sont répartis en surface. De façon générale, le rapport coeur/bord des concentrations $C_{Mo}$, $C_{Ni}$, $C_W$ et $C_P$ est compris entre 0,1 et 3. Dans une variante de l'invention, il est compris entre 0,8 et 1,2. Dans une autre variante de l'invention, le rapport coeur/bord des concentrations $C_P$ est compris entre 0,3 et 0,8.

Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII non nobles qui peuvent être utilisées sont bien connues de l'homme du métier. Par exemple, pour les métaux non nobles on utilisera les nitrates, les sulfates, les hydroxydes, les phosphates, les halogénures comme par exemple, les chlorures, les bromures et les fluorures, les carboxylates comme par exemple les, acétates et les carbonates.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole. Les acides tungsto-phosphorique ou tungsto-molybdique peuvent être employés.

La teneur en phosphore est ajustée, sans que cela limite la portée de l'invention, de telle manière à former un composé mixte en solution et/ou sur le support par exemple tungstène -phosphore ou molybdène-tungstène-phosphore. Ces composés mixtes peuvent être des hétéropolyanions. Ces composés peuvent être des hétéropolyanions d'Anderson, par exemple. La teneur massique en phosphore calculée sous la forme $P_2O_5$ est comprise entre 0,01 et 5%pds, de préférence entre 0,1 et 4%pds, et de manière plus préférée entre 0,2 et 2%pds et de manière encore plus préférée entre 0,2 et 1%pds.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

De nombreuses sources de silicium peuvent être employées. Ainsi, on peut utiliser l'orthosilicate d'éthyle Si$(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les sources d'élément du groupe VB qui peuvent être utilisées sont bien connues de l'homme du métier. Par exemple, parmi les sources de niobium, on peut utiliser les oxydes, tel que le pentaoxyde de diniobium $Nb_2O_5$, l'acide niobique $Nb_2O_5.H_2O$, les hydroxydes de niobium et les polyoxoniobates, les alkoxydes de niobium de formule $Nb(OR1)_3$ où R1 est un radical alkyle, l'oxalate de niobium $NbO(HC_2O_4)_5$, le niobate d'ammonium. On utilise de préférence l'oxalate de niobium ou le niobate d'ammonium.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les catalyseurs utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée. Les catalyseurs selon l'invention peuvent éventuellement être fabriqués et employés sous la forme de poudre concassée, de tablettes, d'anneaux, de billes, de roues.

Conformément à l'invention, les métaux du groupe VIB et/ou du groupe VIII du catalyseur de la présente invention sont présents sous forme sulfure, le traitement de sulfuration étant décrit plus loin.

L'invention concerne également un procédé d'hydrocraquage de charges hydrocarbonées avec lesdits catalyseurs.

**Procédés d' hydrocraquage**

L'invention porte également sur les procédés pour le traitement des coupes hydrocarbonées utilisant le catalyseur selon l'invention.

Plus particulièrement, l'invention porte sur un procédé d'hydrocraquage et/ou d'hydroconversion ainsi que sur un procédé pour l'hydrotraitement de charges hydrocarbonées utilisant le catalyseur selon l'invention.

Le procédé d'hydrocraquage et/ou d'hydroconversion et le procédé d'hydrotraitement selon l'invention opèrent en présence d'hydrogène, à une température supérieure à 200°C, sous une pression supérieure à 1 MPa, la vitesse spatiale étant comprise entre 0,1 et 20 h$^{-1}$ et la quantité d'hydrogène introduite est telle que le rapport volumique litre d'hydrogène/litre d'hydrocarbure soit compris entre 80 et 5000 l/l.

Les catalyseurs selon l'invention sont utilisés avantageusement pour l'hydrocraquage et/ou l'hydroconversion de coupes hydrocarbonées.

Les catalyseurs selon l'invention peuvent être utilisés pour l'hydrotraitement de charges hydrocarbonées, ledit procédé d'hydrotraitement peut être placé seul ou en amont d'un procédé d'hydrocraquage et/ou d'hydroconversion sur un catalyseur d'hydrocraquage à base de zéolithe ou d'alumine-silice, comprenant de préférence du nickel et du tungstène.

Sulfuration des catalyseurs

Conformément à l'invention et préalablement à l'injection de la charge, les catalyseurs utilisés dans le procédé selon la présente invention sont soumis préalablement à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Une méthode de sulfuration classique bien connue de l'Homme du métier consiste à chauffer le catalyseur en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

Charges

Des charges très variées peuvent être traitées par les procédés selon l'invention décrits ci-dessus. Généralement elles contiennent au moins 20% volume et souvent au moins 80% volume de composés bouillant au-dessus de 340°C.

La charge peut être par exemple des LCO (Light Cycle Oil (gazoles légers issus d'une unité de craquage catalytique)), des distillats atmosphériques, des distillats sous vide par exemple gasoils issus de la distillation directe du brut ou d'unités de conversion telles que le FCC, le coker ou la viscoréduction, ainsi que des charges provenant d'unités d'extraction d'aromatiques des bases d'huile lubrifiante ou issues du déparaffinage au solvant des bases d'huile lubrifiante, ou encore des distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, ou encore la charge peut être une huile désasphaltée, ou encore tout mélange des charges précédemment citées. La liste ci-dessus n'est pas limitative. Les paraffines issues du procédé Fischer-Tropsch sont exclues. En général, les charges ont un point d'ébullition T5 supérieur à 340°C, et mieux encore supérieur à 370°C, c'est à dire que 95% des composés présents dans la charge ont un point d'ébullition supérieur à 340°C, et mieux encore supérieur à 370°C.

La teneur en azote des charges traitées dans les procédés selon l'invention est usuellement supérieure à 500 ppm poids, de préférence comprise entre 500 et 10000 ppm poids, de manière plus préférée entre 700 et 4000 ppm poids et de manière encore plus préférée entre 1000 et 4000 ppm poids. La teneur en soufre des charges traitées dans les procédés selon l'invention est usuellement comprise entre 0,01 et 5% poids, de manière préférée comprise entre 0,2 et 4% poids et de manière encore plus préférée entre 0,5 et 3 % poids.

La charge peut éventuellement contenir des métaux. La teneur cumulée en nickel et vanadium des charges traitées dans les procédés selon l'invention est de préférence inférieure à 1 ppm poids.

La teneur en asphaltènes est généralement inférieure à 3000 ppm poids, de manière préférée inférieure à 1000 ppm poids, de manière encore plus préférée inférieure à 200 ppm poids.

Lits de garde

Dans le cas où la charge contient des composés de type résines et/ou asphaltènes, il est avantageux de faire passer au préalable la charge sur un lit de catalyseur ou d'adsorbant différent du catalyseur d'hydrocraquage et/ou d'hydroconversion ou d'hydrotraitement. Les catalyseurs ou lits de garde utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0,2 et 0,75. Leur diamètre extérieur peut varier entre 1 et 35 mm. Parmi les formes particulières possibles sans que cette liste soit limitative, nous citons : les cylindres creux, les anneaux creux, les anneaux de Raschig, les cylindres creux dentelés, les cylindres creux crénelés, les roues de charrettes pentaring, les cylindres à multiples trous, etc..

Ces catalyseurs ou lits de garde peuvent avoir été imprégnés par une phase active ou non. De manière préférée, les catalyseurs sont imprégnés par une phase hydro-déshydrogénante. De manière très préférée, la phase CoMo ou NiMo est utilisée.

Ces catalyseurs ou lits de garde peuvent présenter de la macroporosité. Les lits de garde peuvent être commercialisés par Norton-Saint-Gobain, par exemple les lits de garde MacroTrap®. Les lits de garde peuvent être commercialisés par Axens dans la famille ACT : ACT077, ACT935, ACT961 ou HMC841, HMC845, HMC941 ou HMC945. Il peut être particulièrement avantageux de superposer ces catalyseurs dans au moins deux lits différents de hauteurs variables. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Les lits de garde préférés selon l'invention sont les HMC et l'ACT961.

Conditions opératoires

Les conditions opératoires telles que température, pression, taux de recyclage d'hydrogène, vitesse spatiale horaire, pourront être très variables en fonction de la nature de la charge, de la qualité des produits désirés et des installations dont dispose le raffineur. Le catalyseur d'hydrocraquage/hydroconversion ou d'hydrotraitement est généralement mis en contact, en présence d'hydrogène, avec les charges décrites précédemment, à une température supérieure à 200°C, souvent comprise entre 250 et 480°C, avantageusement comprise entre 320 et 450°C, de préférence entre 330 et 435°C, sous une pression supérieure à 1 MPa, souvent comprise entre 2 et 25 MPa, de manière préférée entre 3 et 20 MPa, la vitesse spatiale étant comprise entre 0,1 et 20 $h^{-1}$ et de préférence 0,1 et 6 $h^{-1}$, de préférence, 0,2 et 3 $h^{-1}$, et la quantité d'hydrogène introduite est telle que le rapport volumique litre d'hydrogène/litre d'hydrocarbure soit compris entre 80 et 5000 UL et le plus souvent entre 100 et 2000 UL.

Ces conditions opératoires utilisées dans les procédés selon l'invention permettent généralement d'atteindre des conversions par passe, en produits ayant des points d'ébullition inférieurs à 340°C, et mieux inférieurs à 370°C, supérieures à 15%pds et de manière encore plus préférée comprises entre 20 et 95%pds.

Modes de réalisation

Les procédés d'hydrocraquage et/ou hydroconversion mettant en oeuvre les catalyseurs selon l'invention couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Le catalyseur de la présente invention peut être utilisé seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydroraffinage situé en amont du catalyseur de la présente invention.

Le catalyseur de la présente invention peut être utilisé seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydroraffinage situé dans un réacteur en lit fixe ou en lit bouillonnant en amont du catalyseur de la présente invention.

Le lit bouillonnant s'opère avec retrait de catalyseur usé et ajout journalier de catalyseur neuf afin de conserver une activité du catalyseur stable.

Procédé dit en une étape

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif. Cependant, il est à noter qu'aucune séparation n'intervient entre les deux types de catalyseurs. La totalité de l'effluent en sortie de réacteur est injectée sur le catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

Procédé dit en une étape en lit fixe

Pour les catalyseurs à faible teneur en silice, les teneurs pondérales en silice du support entrant dans la composition du catalyseur sont comprises entre 5 et 30% et de préférence entre 5 et 20%.

Pour les catalyseurs à forte teneur en silice, les teneurs pondérales en silice du support entrant dans la composition du catalyseur sont comprises entre 20 et 80% et de préférence entre 30 et 60%.

Dans le cas où le catalyseur selon la présente invention est utilisé en amont d'un catalyseur zéolithique d'hydrocraquage, par exemple à base de zéolithe Y, on utilisera avantageusement un catalyseur présentant une faible teneur pondérale en silice telle que définie précédemment. Il pourra aussi être avantageusement utilisé en association avec un catalyseur d'hydroraffinage, ce dernier étant situé en amont du catalyseur de la présente invention.

Lorsque le catalyseur selon la présente invention est utilisé en amont d'un catalyseur d'hydrocraquage à base d'alumine-silice ou à base de zéolithe, dans le même réacteur dans des lits catalytiques distincts ou dans des réacteurs distincts, la conversion est généralement (ou de préférence) inférieure à 50%pds et de manière préférée inférieure à 40%pds.

Le catalyseur selon l'invention peut être utilisé en amont ou en aval du catalyseur zéolithique. En aval du catalyseur zéolithique, il permet de craquer les HPA. Par HPA, on entend les hydrocarbures polyaromatiques tels que décrits notamment dans l'ouvrage "Hydrocracking, Science and Technology" de J.Scherzer, Editions M.Dekker Incorporated, 1996.

Procédé dit en une étape en lit bouillonnant

Le catalyseur selon l'invention peut être utilisé seul dans un ou plusieurs réacteur(s). Dans le cadre d'un tel procédé, on pourra utiliser avantageusement plusieurs réacteur(s) en série, le ou les réacteur(s) en lit bouillonnant contenant le catalyseur selon l'invention étant précédé d'un ou plusieurs réacteur(s) contenant au moins un catalyseur d'hydroraffinage en lit fixe ou en lit bouillonnant.

Lorsque le catalyseur selon la présente invention est utilisé en aval d'un catalyseur d'hydroraffinage, la conversion de la fraction de la charge occasionnée par ce catalyseur d'hydroraffinage est généralement (ou de préférence) inférieure à 30% poids et de manière préférée inférieure à 25%.

Procédé dit en une étape en lit fixe avec séparation intermédiaire

Le catalyseur selon la présente invention peut aussi être utilisé dans un procédé d'hydrocraquage dit en une étape comportant une zone d'hydroraffinage, une zone permettant l'élimination partielle de l'ammoniaque, par exemple par un flash chaud, et une zone comportant un catalyseur d'hydrocraquage. Ce procédé d'hydrocraquage de charges hydrocarbonées en une étape pour la production de distillats moyens et éventuellement de bases huiles comporte au moins une première zone réactionnelle d'hydroraffinage, et au moins une deuxième zone réactionnelle, dans laquelle est opéré l'hydrocraquage d'au moins une partie de l'effluent de la première zone réactionnelle. Ce procédé comporte également une séparation incomplète de l'ammoniaque de l'effluent sortant de la première zone. Cette séparation est avantageusement effectuée au moyen d'un flash chaud intermédiaire. L'hydrocraquage opéré en deuxième zone réactionnelle est réalisé en présence d'ammoniaque en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote. Le catalyseur de la présente invention est utilisé de préférence dans la zone réactionnelle d'hydrocraquage en association ou non avec un catalyseur d'hydroraffinage situé en amont du catalyseur de la présente invention.

Le catalyseur selon l'invention peut également être utilisé dans la première zone réactionnelle en prétraitement convertissant, seul ou en association avec un catalyseur d'hydroraffinage classique, situé en amont du catalyseur selon l'invention, dans un ou plusieurs lit(s) catalytique(s), dans un ou plusieurs réacteur(s).

Procédé d'hydrocraquage dit en une étape avec hydroraffinage préliminaire sur catalyseur d'acidité faible.

Le catalyseur selon l'invention peut être utilisé dans un procédé d'hydrocraquage comprenant :

- une première zone réactionnelle d'hydroraffinage dans laquelle la charge est mise en contact avec au moins un catalyseur d'hydroraffinage présentant dans le test standard d'activité, défini dans le brevet français n°2 840 621, un taux de conversion du cyclohexane inférieur à 10% massique,

- une deuxième zone réactionnelle d'hydrocraquage dans laquelle une partie au moins de l'effluent issu de l'étape d'hydroraffinage est mise en contact avec au moins un catalyseur d'hydrocraquage présentant dans le test standard d'activité un taux de conversion du cyclohexane supérieur à 10% massique, le catalyseur selon l'invention étant présent dans au moins une des deux zones réactionnelles:

La proportion du volume catalytique de catalyseur d'hydroraffinage représente généralement 20 à 45% du volume catalytique total.

L'effluent issu de la première zone réactionnelle est au moins en partie, de préférence en totalité, introduit dans la deuxième zone réactionnelle dudit procédé. Une séparation intermédiaire des gaz peut être réalisée comme décrite précédemment

L'effluent en sortie de deuxième zone réactionnelle est soumis à une séparation dite finale (par exemple par distillation atmosphérique éventuellement suivie d'une distillation sous vide), de manière à séparer les gaz. Il est obtenu au moins une fraction liquide résiduelle, contenant essentiellement des produits dont le point d'ébullition est généralement supérieur à 340°C, qui peut être au moins en partie recyclée en amont de la deuxième zone réactionnelle du procédé selon l'invention, et de préférence en amont du catalyseur d'hydrocraquage à base d'alumine-silice, dans un objectif de production de distillats moyens.

La conversion en produits ayant des points d'ébullition inférieurs à 340°C, ou encore inférieurs à 370°C est d'au moins 50% poids.

Procédé dit en deux étapes

Dans un schéma d'hydrocraquage dit en deux étapes avec séparation intermédiaire entre les deux zones réactionnelles, dans une étape donnée, le catalyseur de la présente invention peut-être utilisé dans l'un ou dans les deux réacteurs en association ou non avec un catalyseur d'hydroraffinage situé en amont du catalyseur de la présente invention.

L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillats moyens (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en $NH_3$ ainsi qu'en composés azotés organiques, en général moins de 20 ppm poids voire moins de 10 ppm poids.

Les configurations de lits catalytiques en lit fixe ou en lit bouillonnant décrites dans le cas d'un procédé dit en une étape peuvent être utilisées dans la première étape d'un schéma dit en deux étapes, que le catalyseur selon l'invention soit utilisé seul ou en association avec un catalyseur d'hydroraffinage classique.

Pour les procédés dits en une étape et pour la première étape des procédés d'hydrocraquage en deux étapes, les catalyseurs préférés selon l'invention sont les catalyseurs dopés à base d'éléments du groupe VIII non nobles, de manière encore plus préférée les catalyseurs à base de nickel et de tungstène, l'élément dopant préféré étant le phosphore.

Les catalyseurs utilisés dans la deuxième étape des procédés d'hydrocraquage en deux étapes sont de préférence les catalyseurs dopés à base d'éléments nobles du groupe VIII, de manière encore plus préférée les catalyseurs à base de platine et/ou de palladium, l'élément dopant préféré étant le phosphore.

Hydrotraitement/hydroraffinage de charges hydrocarbonées selon l'invention

Les catalyseurs selon l'invention sont utilisés pour l'hydrotraitement et l'hydroraffinage de charges hydrocarbonées telles que les coupes pétrolières, les coupes issues du charbon ou les hydrocarbures produits à partir du gaz naturel et plus particulièrement pour l'hydrogénation, l'hydrodésulfuration, l'hydrodéazotation, l'hydrodéoxygénation, l'hydrodésaromatisation et l'hydrodémétallation de charges hydrocarbonées contenant des composés aromatiques et/ou oléfiniques et/ou naphténiques et/ou paraffiniques, lesdites charges contenant éventuellement des métaux et/ou de l'azote et/ou de l'oxygène et/ou du soufre.

Plus particulièrement, les charges employées dans les procédés d'hydrotraitement sont des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent en général des hétéroatomes tels que le soufre, l'oxygène et l'azote et/ou au moins un métal.

Comme rappelé précédemment, les catalyseurs de l'invention peuvent être utilisés dans un grand nombre d'applications d'hydroraffinage ou d'hydrotraitement. Les conditions opératoires qui peuvent être appliquées dans ces procédés sont habituellement : une température de 200 à 450 C, de façon préférée entre 250 et 440°C, une pression de 1 à 25 MPa, de façon préférée entre 1 et 18 MPa, une vitesse volumique horaire de 0,1 à 20 h$^{-1}$, de façon préférée entre 0,2 et 5 h$^{-1}$, un rapport hydrogène/charge exprimé en volume d'hydrogène, mesuré dans les conditions normales de température et pression, par volume de charge liquide généralement de 80 UL à 5000 UL et le plus souvent de 100 UL à 2000 L/L.

**Exemples**

Exemple 1 - Préparation de la zéolithe IZM-2 utilisée dans le catalyseur selon l'invention.

La préparation de la zéolithe IZM-2 utilisée dans le catalyseur selon l'invention passe d'abord par la préparation de son agent structurant, le dibromure de 1,6-bis(méthylpiperidinium)hexane. 50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 ml d'éthanol. Le milieu réactionnel est agité et porté à reflux pendant 5 h. Le mélange est ensuite refroidi à température ambiante puis filtré. Le mélange est versé dans 300 ml de diéthyléther froid puis le précipité formé est filtré et lavé avec 100 ml de diéthyléther. Le solide obtenu est recristallisé dans un mélange éthanol/éther. Le solide obtenu est séché sous vide pendant 12 h. On obtient 71 g d'un solide blanc (soit un rendement de 80 %). Le produit possède le spectre 1H RMN attendu. 1H RMN (D$_2$O, ppm/TMS) : 1,27 (4H,m) ; 1,48 (4H,m) ; 1,61 (4H,m) ; 1,70 (8H,m) ; 2,85 (6H,s) ; 3,16 (12H,m).

La préparation d'un solide IZM-2 utilisée dans le catalyseur selon l'invention est ensuite faite de la manière suivante : 20,269 g d'une suspension colloïdale de silice, connue sous le terme commercial Ludox AS-40 commercialisée par Aldrich, est incorporée dans une solution composée de 0,32 g d'aluminate de sodium (carlo erba), 0,634 g de soude (prolabo), 9,95 g de dibromure de 1,6-bis(méthylpiperidinium)hexane et de 68,82 g d'eau déionisée. La composition molaire du mélange est la suivante : SiO$_2$ ; 0,0125 Al$_2$O$_3$ ; 0,08 Na$_2$O ; 0,17 dibromure de 1,6-bis(méthylpiperidinium) hexane ; 33,33 H$_2$O. Le mélange est agité vigoureusement pendant une demi-heure. Le mélange est ensuite transféré, après homogénéisation, dans un autoclave. L'autoclave est chauffé pendant 9 jours à 170°C sous agitation (250 tours / min). Le produit cristallisé obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante. Le produit solide calciné a été analysé par diffraction des rayons X et identifié comme étant constitué de solide IZM-2.

Exemple 2: Préparation d'un support contenant une zéolithe H-IZM-2 utilisée dans le catalyseur selon l'invention.

Un support de catalyseur selon l'invention contenant une zéolithe IZM-2 a été fabriqué en grande quantité de façon à pouvoir préparer différents catalyseurs à base du même support. La zéolithe IZM-2 , qui est préparée selon l'exemple 1, possède un rapport Si/Al atomique global égal à 29,8 et un rapport atomique Na/Al égal 0,25.

Cette zéotithe IZM-2 est soumise à quatre échanges ioniques dans une solution de NH$_4$NO$_3$ 10N, à environ 100°C pendant 4 heures pour chaque échange. Le solide ainsi obtenu est référencé NH$_4$-IZM-2 et possède un rapport Si/Al = 29,8 et un rapport Na/Al = 0,013.

Un support de catalyseur selon l'invention contenant une zéolithe IZM-2 est fabriqué de la façon suivante : 19,5 g de la zéolithe NH$_4$-IZM-2 sont mélangés à 80,5 g d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% poids (7% poids d'acide par gramme de gel sec) puis malaxé pendant 15 minutes. La pâte malaxée est ensuite extrudée à travers une filière de diamètre 1,2 mm. Les extrudés sont ensuite calcinés à 500°C durant 2 heures sous air. Après calcination à 500°C, la zéolithe est maintenant sous forme protonique H-IZM-2 et les supports Al-IZM-2 sont terminés.

Exemple 3 : Préparation de catalyseurs selon l'invention contenant une zéolithe IZM-2.

Les extrudés de support préparés dans l'exemple 2 sont imprégnés à sec par une solution d'un mélange d'heptamolybdate d'ammonium et de nitrate de nickel, et enfin calcinés sous air à 550°C in-situ dans le réacteur. Les teneurs pondérales en oxydes du catalyseur NiMo-Al-IZM-2 obtenues sont indiquées dans le Tableau 1.

Les extrudés de support de l'exemple 2 sont imprégnés à sec par une solution d'un mélange d'heptamolybdate d'ammonium, de nitrate de nickel et d'acide orthophosphorique, et enfin calcinés sous air à 550°C in-situ dans le réacteur. Les teneurs pondérales en oxydes du catalyseur NiMoP-Al-IZM-2 obtenues sont indiquées dans le Tableau 1.

On ajoute ensuite à ce catalyseur du fluor par imprégnation d'une solution d'acide fluorhydrique diluée de manière à déposer environ 1% en poids de fluor. Après séchage pendant une nuit à 120°C et calcination à 550°C pendant 2 heures sous air sec on obtient le catalyseur NiMoPF-Al-IZM-2. Les teneurs pondérales en oxydes du catalyseur NiMoPF-IZM-2 obtenues sont indiquées dans le Tableau 1.

**Tableau 1** : Caractéristiques des catalyseurs Al-IZM-2 conformes à l'invention.

| Catalyseur | NiMo-Al-IZM-2 | NiMoP-Al-IZM-2 | NiMoPF-Al-IZM-2 |
|---|---|---|---|
| $MoO_3$ (%pds) | 14,1 | 13,4 | 13,3 |
| NiO (%pds) | 3,2 | 3,1 | 3,0 |
| $P_2O_5$ (%pds) | - | 4,1 | 4,1 |
| $SiO_2$ (%pds) global | 14,7 | 14,1 | 14,1 |
| F (%pds) | - | - | 1,0 |
| Complément à 100% (majoritairement composé de $Al_2O_3$ (%pds) | 68,0 | 65,3 | 64,5 |

Exemple 4 : Préparation d'un support contenant une zéolithe IZM-2 et une silice-alumine.

Nous avons fabriqué une poudre de silice-alumine par coprécipitation ayant une composition de 2%pds $SiO_2$ et 98%pds $Al_2O_3$. Un support de catalyseur d'hydrocraquage contenant cette silice-alumine et la zéolithe $NH_4$-IZM-2 de l'exemple 1 a été ensuite fabriqué. Pour cela on utilise 19,7 % poids de la zéolithe $NH_4$-IZM-2 de l'exemple 1 que l'on mélange à 80,3 % poids d'une matrice composée de la silice alumine préparée ci-dessus. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air.

Exemple 5 : Préparation de catalyseurs selon l'invention contenant une zéolithe IZM-2 et une silice-alumine.

Les extrudés de support contenant une silice-alumine et une zéolithe IZM-2 de l'exemple 3 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur NiMoP-SiAl-IZM-2 obtenues sont indiquées dans le Tableau 2.

On ajoute ensuite à ce catalyseur du fluor par imprégnation d'une solution d'acide fluorhydrique diluée de manière à déposer environ 1% en poids de fluor. Après séchage pendant une nuit à 120°C et calcination à 550°C pendant 2 heures sous air sec on obtient le catalyseur NiMoPF-SiAl-IZM-2. Les teneurs pondérales en oxydes du catalyseur NiMoPF-SiAl-IZM-2 obtenues sont indiquées dans le Tableau 2.

**Tableau 2** : Caractéristiques des catalyseurs SiAl-IZM-2conforme à l'invention.

| Catalyseur | NiMoP-SiAl-IZM-2 | NiMoPF-SiAl-IZM-2 |
|---|---|---|
| $MoO_3$ (%pds) | 13,4 | 13,3 |
| NiO (%pds) | 2,9 | 3,0 |
| $P_2O_5$ (%pds) | 4,2 | 4,1 |
| F (%pds) | - | 0,9 |
| $SiO_2$ (%pds) | 15,6 | 15,4 |
| Complément à 100% composé majoritairement de $Al_2O_3$ (%pds) | 63,9 | 63,3 |

Exemple 6 : Comparaison des catalyseurs en hydrocraquage d'un distillat sous vide.

Les catalyseurs dont les préparations sont décrites dans les exemples précédents sont utilisés dans les conditions de l'hydrocraquage à conversion élevée (60-100%). La charge pétrolière est un distillat sous vide hydrotraité dont les principales caractéristiques sont données dans le Tableau 3.

**Tableau 3** : Caractéristique de la charge utilisée.

| | |
|---|---|
| Densité (20/4) | 0,869 |
| Soufre (ppm poids) | 502 |
| Azote (ppm poids) | 10 |
| Distillation simulée | |
| point initial | 298°C |
| point 10 % | 369°C |
| point 50 % | 427°C |
| point 90 % | 481 °C |
| point final | 538°C |

Cette charge a été obtenue par hydrotraitement d'un distillat sous vide sur un catalyseur HRK558 vendu par la société Axens comprenant un élément du groupe VIB et un élément du groupe VIII déposés sur alumine.

On ajoute à la charge 0,6% poids d'aniline et 2% poids de diméthyl-disulfure afin de simuler les pressions partielles de $H_2S$ et de $NH_3$ présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS + aniline jusqu'à 320°C. Notons que toute méthode de sulfuration in-situ ou ex-situ est convenable. Une fois la sulfuration réalisée, la charge décrite dans le Tableau 3 peut être transformée. Les conditions opératoires de l'unité de test sont données dans le Tableau 4.

**Tableau 4** : Conditions de test des catalyseurs.

| | |
|---|---|
| Pression totale | 9 Mpa |
| Catalyseur | 80 $cm^3$ |
| Température | 360-420°C |
| Débit d'hydrogène | 80 L/h |
| Débit de charge | 80 $cm^3$ /h |

Les performances catalytiques sont exprimées par la température qui permet d'atteindre un niveau de conversion brute de 70% et par les rendements en essence et en carburéacteur (kérosène). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C \text{ moins de l'effluent}$$

avec "380°C moins" représentant la fraction, distillée à une température inférieure ou égale à 380°C.

Le rendement en essence (27-150) (ci dessous Rdt Ess) est égal au % poids de composés ayant un point d'ébullition compris entre 27 et 150°C dans les effluents. Le rendement en carburéacteur (kérosène, 150-250, ci dessous Rdt Kéro) est égal au % poids de composés ayant un point d'ébullition compris entre 150 et 250°C dans les effluents. Le rendement en gazole (250-380) est égal au % poids de composés ayant un point d'ébullition compris entre 250 et 380°C dans les effluents.

La température de réaction est fixée de façon à atteindre une conversion brute CB égale à 70% poids. Dans le tableau 7 suivant, nous avons reporté la température de réaction et les rendements en distillat léger et moyens pour les catalyseurs décrits dans les exemples ci-dessus.

**Tableau 5** : Activités catalytiques des catalyseurs en hydrocraquage.

| | T(°C) | Rdt Essence (% pds) | Rdt kérosène (% pds) | Rdt gazole (% pds) |
|---|---|---|---|---|
| NiMo-Al-IZM-2 | 375 | 30,7 | 20,2 | 16,2 |
| NiMoP-Al-IZM-2 | 374 | 30,1 | 21,4 | 17,5 |
| NiMoPF-Al-IZM-2 | 373 | 30,8 | 20,7 | 16,1 |

(suite)

| | T(°C) | Rdt Essence (% pds) | Rdt kérosène (% pds) | Rdt gazole (% pds) |
|---|---|---|---|---|
| NiMoP-SiAl-IZM-2 | 372 | 32,3 | 18,3 | 15,5 |
| NiMoPF-SiAl-IZM-2 | 373 | 31,9 | 17,6 | 14,2 |

Le Tableau 5 met en évidence que les catalyseurs contenant de la zéolithe IZM-2 préparés selon le procédé de l'invention et utilisé dans un procédé selon l'invention sont actifs et conduisent tous à des températures permettant d'obtenir un niveau de conversion de 70%pds de conversion en 380°C moins, à des rendements en distillats élevés et similaires.

## Revendications

1.  Catalyseur comprenant :

    - un support comprenant au moins un solide cristallisé IZM-2 présentant un diagramme de diffraction des rayons X incluant au moins les raies inscrites dans le tableau ci-dessous :

| 2 thêta (°) | dhkl (Å) | Irel | 2 thêta (°) | dhkl (A) | Irel |
|---|---|---|---|---|---|
| 5,07 | 17,43 | ff | 19,01 | 4,66 | ff |
| 7,36 | 12,01 | FF | 19,52 | 4,54 | ff |
| 7,67 | 11,52 | FF | 21,29 | 4,17 | m |
| 8,78 | 10,07 | F | 22,44 | 3,96 | f |
| 10,02 | 8,82 | ff | 23,10 | 3,85 | mf |
| 12,13 | 7,29 | ff | 23,57 | 3,77 | f |
| 14,76 | 6,00 | ff | 24,65 | 3,61 | ff |
| 15,31 | 5,78 | ff | 26,78 | 3,33 | f |
| 15,62 | 5,67 | ff | 29,33 | 3,04 | ff |
| 16,03 | 5,52 | ff | 33,06 | 2,71 | ff |
| 17,60 | 5,03 | ff | 36,82 | 2,44 | ff |
| 18,22 | 4,87 | ff | 44,54 | 2,03 | ff |

    - où FF = très fort ; F = fort ; m = moyen ; mf = moyen faible ; f = faible ; ff = très faible et présentant une composition chimique, exprimée sur une base anhydre, en termes de moles d'oxydes, par la formule générale suivante : $XO_2 : aY_2O_3 : bM_{2/n}O$ dans laquelle X représente au moins un élément tétravalent, Y représente au moins un élément trivalent et M est au moins un métal alcalin et/ou un métal alcalino-terreux de valence n, a et b représentant respectivement le nombre de moles de $Y_2O_3$ et $M_{2/n}O$ et a est compris entre 0 et 0,5 et b est compris entre 0 et 1, et
    - une phase active contenant au moins un élément hydro-déshydrogénant du groupe VIB et /ou au moins un élément hydro-déshydrogénant du groupe VIII non noble de la classification périodique, ledit catalyseur étant un catalyseur phase sulfure.

2.  Catalyseur selon la revendication 1 dans lequel X est le silicium.

3.  Catalyseur selon la revendication 1 ou la revendication 2 dans lequel Y est l'aluminium.

4.  Catalyseur selon l'une des revendications 1 à 3 dans lequel la teneur massique en métal(aux) du groupe VIB est comprise entre 0,1 et 40 % poids par rapport à la masse totale du catalyseur.

5.  Catalyseur selon l'une des revendications 1 à 4 dans lequel la teneur massique en métal(aux) du groupe VIII non noble est comprise entre 0 à 25% poids par rapport à la masse totale du catalyseur.

6. Catalyseur selon l'une des revendications 1 à 5 dans lequel les éléments du groupe VIB sont choisis dans le groupe formé par le tungstène et le molybdène, pris seuls ou en mélange.

7. Catalyseur selon l'une des revendications 1 à 6 dans lequel les éléments non nobles du groupe VIII sont choisis dans le groupe formé par le cobalt et le nickel, pris seuls ou en mélange.

8. Catalyseur selon l'une des revendications 1 à 7 dans lequel ledit catalyseur contient en outre un liant minéral poreux amorphe ou mal cristallisé de type oxyde.

9. Procédé d'hydrocraquage et/ou d'hydroconversion de charges hydrocarbonées utilisant le catalyseur selon l'une des revendications 1 à 8.

10. Procédé d'hydrocraquage et/ou d'hydroconversion selon la revendication 9 tel qu'il est réalisé selon le procédé dit en une étape.

11. Procédé d'hydrocraquage et/ou d'hydroconversion selon la revendication 9 tel qu'il est réalisé selon le procédé dit en deux étapes.

12. Procédé d'hydrotraitement de charges hydrocarbonées utilisant le catalyseur selon l'une des revendications 1 à 8.

13. Procédé selon l'une des revendications 9 à 12 tel qu'il opère en présence d'hydrogène, à une température supérieure à 200°C, sous une pression supérieure à 1 MPa, la vitesse spatiale étant comprise entre 0,1 et 20 $h^{-1}$ et la quantité d'hydrogène introduite est telle que le rapport volumique litre d'hydrogène / litre d'hydrocarbure soit compris entre 80 et 5000 l/l.

14. Procédé selon l'une des revendications 9 à 13 dans lequel les charges hydrocarbonées sont choisies dans le groupe formé par les LCO (light cycle oil : gazoles légers issus d'une unité de craquage catalytique), les distillats atmosphériques, les distillats sous vide, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, les huiles désasphaltées, seules ou en mélange.

**Claims**

1. Catalyst comprising

   - a substrate comprising at least one crystallised IZM-2 solid displaying an X-ray diffraction pattern including at least the rays listed in the table hereinafter

| 2 theta | dhkl (Å) | Irel | 2 theta | dhkl (Å) | Irel |
|---------|----------|------|---------|----------|------|
| 5.07 | 17.43 | ww | 19.01 | 4.66 | ww |
| 7.36 | 12.01 | ss | 19.52 | 4.54 | ww |
| 7.67 | 11 52 | ss | 21.29 | 4.17 | m |
| 8.78 | 10.07 | s | 22.44 | 3.96 | w |
| 10.02 | 8.82 | ww | 23.10 | 3.85 | mw |
| 12.13 | 7.29 | ww | 23.57 | 3.77 | w |
| 14.76 | 6.00 | ww | 24.65 | 3.61 | ww |
| 15.31 | 5.78 | ww | 26.78 | 3.33 | w |
| 15.62 | 5.67 | ww | 29.33 | 3.04 | ww |
| 1603 | 5.52 | ww | 33.06 | 271 | ww |

(continued)

| 2 theta | dhkl (Å) | Irel | 2 theta | dhkl (Å) | Irel |
|---------|----------|------|---------|----------|------|
| 17.60 | 5.03 | ww | 36.82 | 2.44 | ww |
| 18.22 | 4.87 | ww | 44.54 | 2.03 | ww |

- where ss = very strong; s = strong; m = moderate; mw = moderately weak; w = weak; ww = very weak and having a chemical composition, expressed on an anhydrous base, in terms of oxide moles, by the following general formule: $XO_2 : aY_2O_3 : bM_{2/n}O$, wherein X represents at least one tetravalent element, Y represents at least one trivalent element and M is at least one alkali metal and/or an alkaline earth metal of valency n, a and b representing respectively the number of moles of $Y_2O_3$ and $M_{2/n}O$ and a is between 0 and 0.5 and b is between 0 and 1, and

- an active phase containing at least one hydro-dehydrogenating element from group VIB and/or at least one hydro-dehydrogenating element from non-noble group VIII of the periodic table, said catalyst being a sulphide phase catalyst.

2. Catalyst according to claim 1, wherein X is silicon

3. Catalyst according to claim 1 or claim 2, wherein Y is aluminium.

4. Catalyst according to one of claims 1 to 3, wherein the content by mass of group VIB metal(s) is between 0.1 and 40 % by weight relative to the total mass of the catalyst.

5. Catalyst according to one of claims 1. to 4, wherein the content by mass of non-noble group VIII metal(s) is between 0 and 25 % by weight relative to the total mass of the catalyst.

6. Catalyst according to one of claims 1 to 5, wherein the group VIB elements are selected from the group formed by tungsten and molybdenum, taken alone or in a mixture.

7. Catalyst according to one of claims 1 to 6, wherein the group VIII non-noble elements are selected from the group formed by cobalt and nickel, taken alone or in a mixture.

8. Catalyst according to one of claims 1 to 7, wherein said catalyst also contains an oxide-type amorphous or poorly crystallised porous inorganic binder.

9. Process for hydrocracking and/or hydroconversion of hydrocarbonated feedstocks using the catalyst according to one of claims 1 to 8.

10. Hydrocracking and/or hydroconversion process according to claim 9, such as it is carried out using what is known as the one-step process.

11. Hydrocracking and/or hydroconversion process according to claim 9, such as it is carried out using what is known as the two-step process.

12. Process for the hydrotreatment of hydrocarbonated feedstocks using the catalyst according to one of claims 1 to 8.

13. Process according to one of claims 9 to 12, such as it operates in the presence of hydrogen, at a temperature higher than 200 °C, under a pressure higher than 1 MPa, the space velocity being between 0.1 and 20 $h^{-1}$ and the quantity of hydrogen introduced is such that the litre of hydrogen/litre of hydrocarbon ratio by volume is between 80 and 5,000 l/l.

14. Process according to one of claims 9 to 13, wherein the hydrocarbonated feedstocks are selected from the group formed by LCOs (light cycle oils: light gas oils obtained from a catalytic cracking unit), atmospheric distillates, distillates under vacuum, feedstocks originating from aromatic extraction units of lubricating oil bases or obtained by solvent dewaxing of lubricating oil bases, distillates originating from processes for desulphurisation or hydroconversion in a fixed bed or in a bed ebullating with ARs (atmospheric residues) and/or RUVs (residues under vacuum) and/or deasphalted oils, deasphalted oils, alone or in a mixture.

**Patentansprüche**

1. Katalysator, umfassend:

- einen Träger, der mindestens einen kristallisierten Feststoff IZM-2 umfasst, der ein Röntgenbeugungsdiagramm aufweist, welches mindestens die Signale umfasst, die in der untenstehenden Tabelle aufgeführt sind:

| 2 theta (°) | dhkl (Å) | Irel | 2 theta (°) | dhkl (Å) | Irel |
|---|---|---|---|---|---|
| 5,07 | 17.43 | ss | 19,01 | 4,66 | ss |
| 7,36 | 12,01 | SS | 19,52 | 4,54 | ss |
| 7,67 | 11,52 | SS | 21.29 | 4,17 | m |
| 8,78 | 10,07 | S | 22,44 | 3,96 | s |
| 10,02 | 8,82 | ss | 23,10 | 3,85 | ms |
| 12,13 | 7,29 | ss | 23,57 | 3,77 | s |
| 14,76 | 6,00 | ss | 24,65 | 3,61 | ss |
| 15,31 | 5,78 | ss | 26,78 | 3,33 | s |
| 15,62 | 5,67 | ss | 29.33 | 3,04 | ss |
| 16,03 | 5,52 | ss | 33,06 | 2,71 | ss |
| 17,60 | 5,03 | ss | 36,82 | 2,44 | ss |
| 18.22 | 4,87 | ss | 44,54 | 2.03 | ss |

- wobei SS = sehr staik; S = staik; m = mittel; ms = mittelschwach, s = schwach; ss = sehr schwach ist und wobei er eine chemische Zusammensetzung aufweist, die auf einer wasserfreien Basis, in Mol an Oxiden, durch die folgende allgemeine Formel ausgedrückt wird: $XO_2 : aY_2O_3 : bM_{2/n}O$, wobei X mindestens ein vierwertiges Element darstellt, Y mindestens ein dreiwertiges Element darstellt und M mindestens ein Alkalimetall und/oder Erdalkalimetall der Wertigkeit n ist, a und b die Anzahl der Mole an $Y_2O_3$ beziehungsweise $M_{2/n}O$ darstellen und a im Bereich von 0 bis 0,5 liegt und b im Bereich von 0 bis 1 liegt, und
- eine aktive Phase, die mindestens ein hydrierend-dehydrierend wirkendes Element der Gruppe VIB und/oder mindestens ein hydrierend-dehydrierend wirkendes unedles Element der Gruppe VIII des Periodensystems enthält, wobei es sich bei dem Katalysator um einen Sulfidphasenkatalysator handelt.

2. Katalysator nach Anspruch 1, wobei X Silicium ist.

3. Katalysator nach Anspruch 1 oder Anspruch 2, wobei Y Aluminium ist.

4. Katalysator nach einem der Ansprüche 1 bis 3, wobei der Massenanteil an Metall(en) der Gruppe VIB im Bereich von 0.1 bis 40 Gewicht-% liegt, bezogen auf die Gesamtmasse des Katalysators.

5. Katalysator nach einem der Ansprüche 1 bis 4, wobei der Massenanteil an unedlam/unedlen Metall(en) der Gruppe VIII im Bereich von 0 bis 25 Gewicht-% liegt, bezogen auf die Gesamtmasse des Katalysators.

6. Katalysator nach einem der Ansprüche 1 bis 5, wobei die Elemente der Gruppe VIB aus der Gruppe ausgewählt sind, die von Wolfram und Molybdän, einzeln oder in Mischung, gebildet wird.

7. Katalysator nach einem der Ansprüche 1 bis 6, wobei die unedlen Elemente der Gruppe VIII aus der Gruppe ausgewählt sind, die von Kobalt und Nickel, einzeln oder in Mischung, gebildet wird.

8. Katalysator nach einem der Ansprüche 1 bis 7, wobei der Katalysator darüber hinaus ein amorphes oder schlecht kristallisiertes poröses mineralisches Bindemittel des Typs Oxid enthält.

9. Verfahren zum Hydrocracken und/oder hydrierenden Umwandeln von kohlenwasserstoffhaltigen Chargen, wobei der Katalysator nach einem der Ansprüche 1 bis 8 verwendet wird.

10. Verfahren zum Hydrocracken und/oder hydrierenden Umwandeln nach Anspruch 9, derart, dass es gemäß einem sogenannten Ein-Schritt-Verfahren durchgeführt wird.

11. Verfahren zum Hydrocracken und/oder hydrierenden Umwandeln nach Anspruch 9, derart, dass es gemäß einem sogenannten Zwei-Schritt-Verfahren durchgeführt wird.

12. Verfahren zur Hydrobehandlung von kohlenwasserstoffhaltigen Chargen, wobei der Katalysator nach einem der Ansprüche 1 bis 8 verwendet wird.

13. Verfahren nach einem der Ansprüche 9 bis 12, derart, dass es in Anwesenheit von Wasserstoff, bei einer Temperatur von mehr als 200 °C, unter einem Druck von mehr als 1 MPa betrieben wird, wobei die Raumgeschwindigkeit im Bereich von 0,1 bis 20 $h^{-1}$ liegt und die eingeleitete Menge an Wasserstoff derart ist, dass das Volumenverhältnis an Litern Wasserstoff / Litern Kohlenwasserstoff im Bereich von 80 bis 5000 l/l liegt.

14. Verfahren nach einem der Ansprüche 9 bis 13, wobei die kohlenwasserstoffhaltigen Chargen aus der Gruppe ausgewählt sind, die von den LCO (Light Cycle Oil: leichte Gasölfraktion, die aus einer katalytischen Crackanlage stammt), den atmosphärischen Destillaten, den Vakuumdestillaten, den Chargen, welche aus Anlagen zur Extraktion von aromatischen Verbindungen aus Schmierölgrundstoffen stammen oder welche aus der löseinittelgestützten Paraffinentfernung aus Schmierölgrundstoffen stammen, den Destillaten, welche aus Festbett- oder Wirbelbettverfahren zur Entschwefelung oder hydrierenden Umwandlung von RAT (atmosphärischen Rückständen) und/oder von RSV (Vakuumrückständen) und/oder von entasphaltierten Ölen stammen, den entasphaltierten Ölen, einzeln oder in Mischung, gebildet wird.

## RÉFÉRENCES CITÉES DANS LA DESCRIPTION

**Documents brevets cités dans la description**

- EP 1953118 A
- WO 2009144414 A
- FR 2840621

**Littérature non-brevet citée dans la description**

- **de J.Scherzer.** Hydrocracking, Science and Technology. 1996